# EUROPEAN PATENT APPLICATION

(11) **EP 2 109 275 A1**
(43) Date of publication of application: **14.10.2009**
(21) Application number: 07846190.2
(22) Date of filing: 28.12.2007
(51) Int. Cl.: H04L 29/06

(54) **METHOD AND DEVICE OF CONTROLLING THE NUMBER OF SESSIONS OF USER**

(30) Priority: 31.12.2006 CN 200610063740
(71) Applicant: Huawei Technologies Co., Ltd., Shenzhen, Guangdong Province 518129 (CN)
(72) Inventor: HUANG, Fuqing, Shenzhen Guangdong 518129 (CN)
(74) Representative: Gulde Hengelhaupt Ziebig & Schneider
(86) International application number: PCT/CN2007/071364
(87) International publication number: WO 2008/083597

(57) **Abstract**

A method of controlling the number of sessions of user includes: accepting establishing session of the user, determining strategy of the number of sessions of the user or the user group used by the user; performing strategy checking based on the strategy of the number of sessions and the sessions information established by the user. If the user passing the strategy checking is determined, session is established for user, if not, the session requested by the user is rejected. A Resource and Admission Control Subsystem (RACS) of controlling the number of sessions of the user is also provided. The method and RACS provide better ability of managing sessions for network, and avoid the network resource from being occupied overmuch due to overmuch sessions being established, and enhance the ability of preventing the network from being used illegally. Meanwhile, the providers can fine the network managing and provide different number of sessions controlling for users who have different requests of number of sessions.

## Description

### Field of the Invention

The present invention relates to the network management technology and in particular to a method and device for controlling the number of user sessions.

### Background of the Invention

Since the birth of the Internet, Quality of Service (QoS) has been given attention in the industry. In the prior art, QoS may be guaranteed by using various technical solutions, for example, Internet Engineering Task Force (IETE) proposed an Integrated Services (IntServ) model under the driving of a real-time service such as Voice over IP (VoIP), which is a stream based QoS mechanism used to control resources strictly and to provide strict QoS assurance for application. However, the technical solution has a problem in extensibility in that IntServ can not achieve large scale application because each router passed by a service stream has to maintain a soft state for the service stream.

To solve the problem in extensibility of IntServ, IETF also proposed a Differentiated Services (DiffServ) model that is a class based QoS mechanism. The DiffServ model has achieved a success on deployment; however, it only provides relative QoS assurance and in particular, the QoS can not be guaranteed when bandwidth is not enough.

In recent years, Dynamic QoS (DQoS), that is, a session based dynamic QoS control mechanism, increasingly becomes a research direction. The mechanism may implement a Connection Admission Control (CAC) based on each session, resource reservation and dynamic issuing of policy on control plane, and implement a service aware and a policy execution on data plane. The mechanism provides not only strict QoS assurance but also good extension.

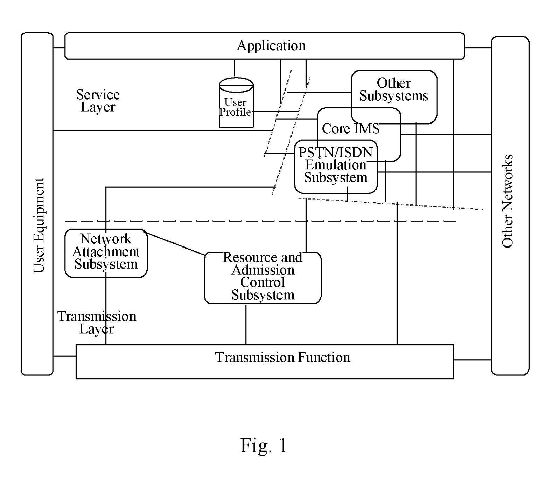

In existing technical solutions related to the DQoS, a solution of Telecommunications and Internet Converged Services and Protocols for Advanced Networking (TISPAN) is prominent. Figure 1 is a schematic diagram illustrating the architecture of Next Generation Network (NGN) customized by existing TISPAN. This architecture adopts a subsystem-oriented design concept, which can adapt to new requirements and services with time changed and facilitates subsystems to be introduced from other standards organizations. In addition, the architecture of the subsystem can be adjusted flexibly without influence on other subsystems.

Each subsystem is also an integration of function entities and interfaces, and may combine some function entities together in accordance with a commercial model, a provided service and capacity when performing an embodiment, and in that case, interfaces between these entities become internal interfaces.

The TISPAN architecture is divided into two function layers of service layer and IP based transmission layer. The service layer includes the following components: IP Multimedia Subsystem (IMS), Public Switched Telephone Network (PSTN)/Integrated Services Digital Network (ISDN) Emulation Subsystem, other multimedia systems such as a stream media subsystem, a content broadcast subsystem, and applications. In addition, the service layer further includes some public components, such as accounting function, user data management, security management, routing database and the like. The transmission layer provides IP interconnection for user devices, and introduces two control subsystems which are Network Attachment Subsystem (NASS) and Resource and Admission Control Subsystem (RACS).

The NASS primarily has functions of:
(1) providing an IP address and other parameters for configuration of user device dynamically;
(2) performing a user authentication before IP address allocation or during the allocation;
(3) performing a network access authorization;
(4) performing a user location management;
(5) performing a Customer Premises Equipment (CPE) configuration.

The RACS primarily provides functions of admission control and gate control. The admission control performs an examination and an authorization based on policies and rules of a provider, resource availability and subscription information.

An E4 reference point is defined between the RACS subsystem and the NASS subsystem, and the RACS subsystem obtains from the NASS subsystem via the reference point location information, such as a physical node address through which a user may be reached, so as to determine available network resource. The RACS subsystem may further obtain from the NASS subsystem user network profile as a reference when processing a user session. Information exchanged on the E4 reference point includes a subscriber ID, a user physical access ID, a user logical access ID, a user access network type, a user global unique IP address, a user initial gate setting, a user's subscription data, a user's QoS profile, a user based accounting rule, and a user based policy information.

Up to now, the RACS subsystem still does not have a function which limits the number of sessions established for a user, and user information exchanged in the NASS subsystem and the RACS subsystem also does not include information of the number of sessions permitted to be established for a user. Because the RACS subsystem does not limit the number of sessions established for a single user, some users may over-occupy the network resources due to establishment of excessive sessions, so that normal sessions of other users may not be established due to the absence of network resources, and thus normal operation of a network and the satisfaction of users are affected. In another aspect, some user may need only a few sessions to be established, while some others need more sessions to be established, but the RACS subsystem can not process differently the demands of different users or various classes of user groups.

### Summary of the Invention

An embodiment of the present invention provides a method for controlling the number of user sessions, which is capable of limiting the number of sessions established for a user in an RACS subsystem.

An embodiment of the present invention provides an RACS for controlling the number of user sessions, which is capable of limiting the number of sessions established for a user in the RACS subsystem.

The technical solutions according to the present invention are as follows.

A method for controlling a number of user sessions includes: receiving a session establishment request of a user, and determining a session count policy for user or user group that is suitable for the user; and performing a policy check according to the session count policy for user or user group and information of the sessions established for the user, and establishing a session for the user upon determining that the policy check for the user can be passed, otherwise, rejecting the session establishment requested by the user.

An RACS for controlling the number of user sessions includes a session count control module, a session information record module and a session count policy set storage module.

The session count policy set storage module is adapted to store a session count policy set for user or user group.

The session information record module is adapted to record information of sessions established for a user.

The session count control module is adapted to determine, by interacting with the session count policy set storage module, a session count policy suitable for the user who requests to establish a session, to perform a policy check based on the session count policy and the recorded information of sessions established for the user in the session information record module, and to establish a session for the user upon determining that the policy check for the user can be passed, otherwise, to reject session establishment requested by the user.

The embodiments of the present invention is able to overcome the shortcomings of the prior art. The session count policy for user or user group is established in the RACS subsystem. When establishing a user session, the RACS subsystem determines a session count policy for user or user group which is suitable for the user session, and then the RACS makes a decision based on the session count policy for user or user group, so as to determine whether to reject the technical solution for establishing the user session. The present invention can provide a more powerful capability of the session management, prevent some users from over- occupying network resources due to excessive establishment of sessions, and improve a risk-control capability for illegally using network, while the present invention enable operators to implement subdivision of the network operation, so that different session count controls are provided for users requesting various session counts.

### Brief Description of the Drawings

The exemplary embodiments are described as follows in detail by reference to the accompanying drawings, so that the above and other features and advantages become more apparent for those skilled in the art, in which:

Figure 1 is a schematic diagram illustrating architecture of Next Generation Network (NGN) customized by existing TISPAN.

Figure 2 is a schematic structure diagram of an RACS in an embodiment of the present invention;

Figure 3 is a flow chart of a method according to a first embodiment of the invention; and

Figure 4 is a flow chart of a method according to a second embodiment of the invention.

### Detailed Description of the Invention

In the embodiments of the present invention, a session establishment request of a user is received, a session count policy for user or user group that is suitable for the user is determined, a policy check is performed according to the determined session count policy for user or user group and information of the sessions established for the user, and a session is established for the user upon determining that the policy check for the user can be passed, otherwise, session establishment requested by the user is rejected.

The present invention will further be described in detail, in conjunction with accompanying drawings and embodiments below, so that the objects, technical solutions and advantages of the present invention become more apparent. It should be understood that the embodiments described here serve to explain, but not limit the present invention.

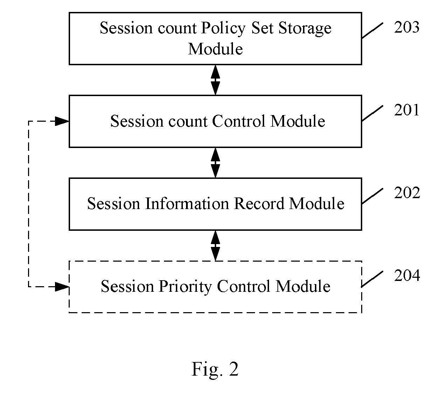

Figure 2 is a schematic structure diagram of an RACS in an embodiment of the present invention. As illustrated in Figure 2, the RACS of the embodiment includes a session count control module 201, a session information record module 202 and a session count policy set storage module 203. The session count control module 201 is connected with the session information record module 202 and the session count policy set storage module 203, respectively.

The session count policy set storage module 203 is adapted to store a session count policy set for user or user group. The session information record module 202 is adapted to record information of the sessions established for a user. The session count control module 201 is adapted to determine, by interacting with the session count policy set storage module 203, the session count policy suitable for the user who requests to establish a session, to determine whether a policy check for the user can be passed based on the recorded information of the sessions established for the user in the session information record module 202 and the session count policy suitable for the user, and to reject or accept the session request of the user based on the result of the policy check.

In implementation, the RACS described in the embodiment of the invention further includes a session priority control module 204 which is connected with the session information record module 202 and the session count control module 201. When the session count control module 201 determines that the number of sessions established for the user has met a number defined in the session count policy suitable for the user, the session priority control module 204 is adapted to determine whether the session priority is supported by the user, and if the session priority is supported, the session priority control module 204 further determines whether there exists a session, in the sessions established for the user, with priority lower than the priority of the current session requested to be established, according to the information recorded in the session information record module 202, and if so, a session with lower priority is released on which the information is sent to the session count control module 201.

Based on above components, in the embodiment of the present invention, a session count policy set for user or user group is required to be established for the RACS subsystem firstly through the following approaches.

Method 1: The RACS subsystem interacts with a user information entity or a user information subsystem to obtain a session count policy for user or user group through one of the following two interaction ways. The first way for interaction is that the RACS subsystem queries the session count policy for user or user group from the user information entity or the user information subsystem; and the second way for interaction is that the user information entity or the user information subsystem initiatively reports to the RACS the session count policy for user or user group.

The user information entity or the user information subsystem includes an NASS subsystem, a Subscription Profile Repository (SPR), a Gateway GPRS Support Node (GGSN), a Broadband Remote Access Server (BRAS), a Home Subscriber Server (HSS), a Home Location Register (HLR), an Authentication, Authorization and Accounting (AAA) server.

The NASS can provide the RACS with the session count policy for user or user group via the E4 reference point.

Method 2: A session count policy set for user or user group is provided in the RACS subsystem. Specifically, the session count policy for user or user group may be added into the RACS subsystem by an operator through a network management configuration interface or a command line interface. Alternatively, the session count policy for user or user group may also be obtained by the RACS subsystem through accessing a file or a database.

The above session count policy for user or user group may be in one of the following forms:

1) A maximum count of sessions permitted to be established for the user is specified. For example, the maximum count of sessions of a user A is 10.

2) A maximum count of a class of sessions permitted to be established for the user is specified. For example, the maximum count of IMS sessions of the user A is 4, and the session count of Video on Demands (VODs) of a user B is 3.

3) A maximum count of sessions permitted to be established for all users in a user group is specified. For example, the maximum count of sessions of all Internet Protocol Television (IPTV) users is 10000, and the maximum count of sessions of all users over the equipment A is 10000.

4) A maximum count of a class of sessions permitted to be established for all users in a user group is specified. For example, the number of sessions with the highest priority for an IMS gold user is not limited.

5) A maximum count of sessions permitted to be established for each user of a user group is specified.

6) A maximum count of a class of sessions permitted to be established for each user in a user group is specified.

For a user, there may be one or more session count policies for the user or user group suitable for this user.

After the session count policy for user or user group is established in the RACS subsystem, the RACS subsystem determines a session count policy for user or user group suitable for the current user when establishing a user session. For a single user, a corresponding session count policy for user may be determined in accordance with a global IP address of the user or a user name. For a user in a user group, a corresponding session count policy for user may be determined in accordance with a grouping rule for the user group, for example, the matching may be performed in accordance with the established session count policy for user group in the RACS subsystem.

If the established session count policy for user group in the RACS subsystem is that the maximum count of sessions for each user with IP address within the network segment of 3.0.0.0 is 3, the matching is performed in accordance with the network segment to which the user's IP address belongs, for example, the user's IP address is 3.1.2.125, this user's IP address belongs to the network segment of 3.0.0.0, then the policy is suitable for the user.

If the session count policy for user group is that the maximum count of sessions of each of the users being IMS gold users is 5, the matching is performed in accordance with the user class of the user, for example, if the user is a IMS gold user, then the policy is suitable for the user.

If the session count policy for user group is that the maximum count of sessions of all users over the equipment A is 10000, it is required to determine whether the equipment used by the users is A; if so, the policy is suitable for the user.

After the session count policy suitable for the user is determined based on the above solutions, the RACS subsystem makes a decision in accordance with the session count policy for user or user group to determine whether to admit or reject the session establishment requested by the user.

If the session count in compliance with a session count policy for a user or user group does not reach the maximum count defined, it represents that a policy check for the user session is passed, and the session is permitted to be established. If the session count in compliance with a session count policy for a user or user group has exceeded the maximum count defined, it represents that the policy check for the user session is not passed, and the RACS subsystem rejects the user session to be established.

In the practical operation, the RACS subsystem may reduce the session count in compliance with the policy by releasing some established sessions, so that the policy check for the user may eventually be passed. For example, the RACS subsystem may release a session of normal call to satisfy a session of urgent call firstly.

Hereinafter, an example in which the NASS subsystem provides the RACS subsystem with the session count policy for user via the E4 reference point, the RACS subsystem establishes a session count policy set, and the RACS determines whether to admit or reject the user session to be established according to the session count policy when establishing the user session is taken for description. According to the specific session count policy, two embodiments are used for description in detail.

### Embodiment 1:

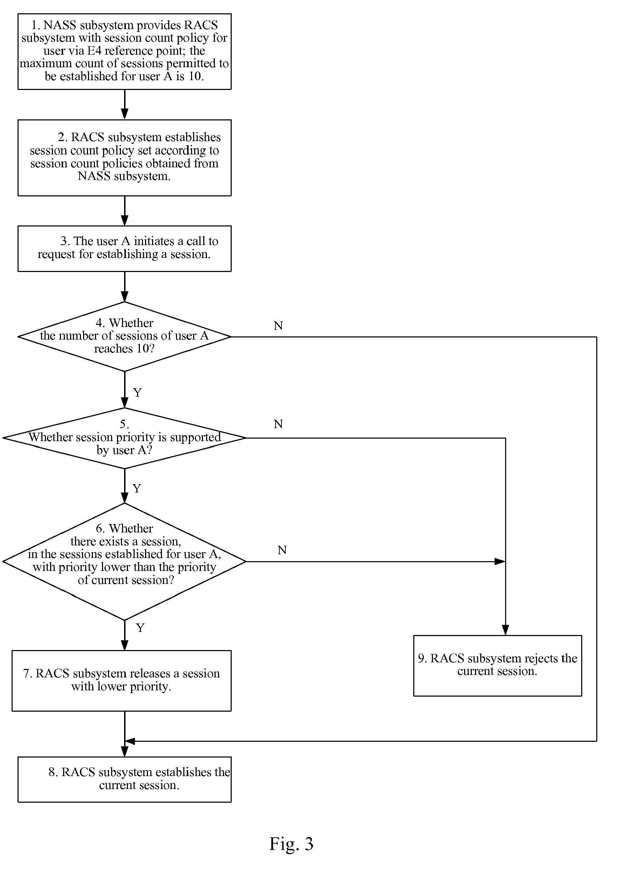

Figure 3 is a flow chart of a method according to a first embodiment of the invention. In the embodiment, the session count policy is that a maximum count of sessions permitted to be established for the user is specified. As illustrated in Figure 3, the method includes the following steps:

1. The NASS subsystem provides the RACS subsystem with a session count policy for a user via the E4 reference point. The policy is specifically that a maximum count of sessions permitted to be established for the user is specified, for example, the maximum count of sessions permitted to be established for the user is 10.

2. The RACS subsystem establishes a session count policy set according to the session count policy obtained from the NASS subsystem.

3. The user A initiates a call to request for establishing a session.

4. The RACS subsystem determines the session count policy suitable for the user A as that the maximum count of sessions permitted to be established for the user A is 10; checks the number of sessions that has been established for the user A; determines whether the number of sessions of the user A is 10; and if so, it proceeds to step 5; otherwise, it proceeds to step 8.

5. The RACS subsystem determines whether the user A supports session priority; if so, it proceeds to step 6; otherwise, it proceeds to step 9.

6. The RACS subsystem determines whether there exists a session, in the sessions established for the user A, with priority lower than the priority of the current session; and if so, it proceeds to step 7; otherwise, it proceeds to step 9.

7. The RACS subsystem releases a session with lower priority.

8. The RACS subsystem establishes the current session.

9. The RACS subsystem rejects the current session.

### Embodiment 2:

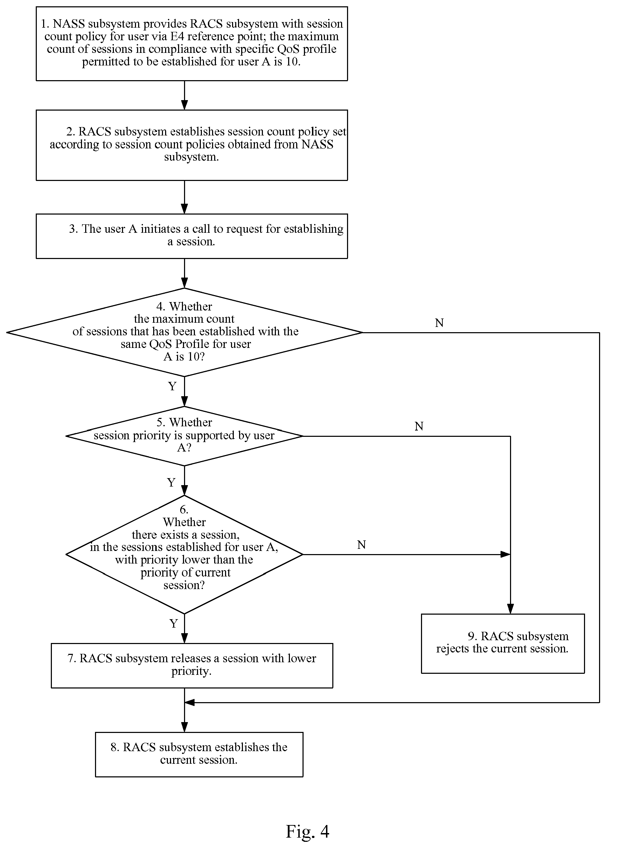

Figure 4 is a flow chart of a method according to a second embodiment of the invention. In the embodiment, the session count policy is that the maximum count of sessions in compliance with a specific QoS profile permitted to be established for a user is specified. As illustrated in Figure 4, the method includes the following steps:

1. The NASS subsystem provides the RACS subsystem with a session count policy for a user via the E4 reference point. The policy is that the maximum count of sessions in compliance with a specific QoS profile permitted to be established for a user is specified, for example, the maximum count of sessions in compliance with the specific QoS profile permitted to be established for the user A is 10.

2. The RACS subsystem establishes a session count policy set according to the session count policy obtained from the NASS subsystem.

3. The user A initiates a call to request for establishing a session.

4. The RACS subsystem determines the session count policy suitable for the user A as that the maximum count of sessions in compliance with the specific QoS profile permitted to be established for the user A is 10; checks the number of sessions that has been established with the same QoS Profile by the user A; determines whether the number of sessions reaches 10; and if so, it proceeds to step 5; otherwise, it proceeds to step 8.

5. The RACS subsystem determines whether the user A supports session priority; if so, it proceeds to step 6; otherwise, it proceeds to step 9.

6. The RACS subsystem determines whether there exists a session, in the sessions established for the user A, with priority lower than the priority of the current session; and if so, it proceeds to step 7; otherwise, it proceeds to step 9.

7. The RACS subsystem releases a session with lower priority.

8. The RACS subsystem establishes the current session.

9. The RACS subsystem rejects the current session.

It can be seen from the embodiments of the present invention, the present invention provides a better capability of the session management, prevents some users from over-occupying network resources due to excessive sessions established, and improves a risk-control capability for illegally using network. The present invention also enables operators to implement subdivision of the network operation, so that different session count controls are provided for users requesting different session counts.

The present invention is disclosed by, but not limited to, the above exemplary embodiments. From the above disclosure, any variations, modifications and equivalent substitutions within the spirit and principle of the present invention should be included within the protection scope of the present invention.

## Claims

1. A method for controlling a number of user sessions, comprising:
receiving a session establishment request of a user, and determining a session count policy for user or user group that is suitable for the user; and
performing a policy check according to the session count policy for user or user group and information of the sessions established for the user, and establishing a session for the user upon determining that the policy check for the user may be passed, otherwise, rejecting the session establishment requested by the user.

2. The method according to claim 1, further comprising: before receiving the session establishment request of the user,
obtaining the session count policy for user or user group by interacting with a user information entity or a user information subsystem, and establishing a session count policy set for user or user group.

3. The method according to claim 2, wherein the user information entity or the user information subsystem comprises a Network Attachment subsystem (NASS), a Subscription Profile Repository (SPR), a Gateway GPRS Support Node (GGSN), a Broadband Remote Access Server (BRAS), a Home Subscriber Server (HSS), a Home Location Register (HLR), an Authentication, Authorization and Accounting (AAA) server.

4. The method according to claim 1, further comprising: before receiving the session establishment request of the user, configuring the session count policy for user or user group.

5. The method according to claim 1, wherein the determining of a session count policy for user or user group suitable for the user comprises:
determining a session count policy for user that is suitable for a user in accordance with a global IP address of the user or a user name, or determining a session count policy for user group that is suitable for the user in accordance with a grouping rule of the user group to which the user belongs, when the user requests for establishing a session.

6. The method according to any one of claims 1 to 5, wherein the session count policy for user comprises: specifying a maximum count of sessions permitted to be established for the user; or specifying a maximum count of a class of sessions permitted to be established for the user; and
the session count policy for user group comprises: specifying a maximum count of sessions permitted to be established for all users belonging to a user group; or specifying a maximum count of a class of sessions permitted to be established for all users belonging to a user group; or specifying a maximum count of sessions permitted to be established for each user belonging to a user group, or specifying a maximum count of a class of sessions permitted to be established for each user belonging to a user group.

7. The method according to any one of claims 1 to 5, wherein the determining that the policy check for the user can be passed comprises:
determining whether the number of sessions established for the user reaches the maximum count defined in the session count policy for user or user group; if the number of sessions established for the user does not reach the maximum count defined in the session count policy for user or user group, determining that the policy check for the user may be passed; otherwise, determining that the policy check for the user may not be passed.

8. The method according to claim 7, further comprising: if determining that the policy check for the user may not be passed,
determining whether a session priority is supported by the user; if the session priority is not supported by the user, rejecting to establish the session requested by the user; otherwise, further determining whether there exist one or more sessions, in the previously established sessions of the user, with priority lower than the priority of the current session requested to be established; if the sessions do not exist, rejecting to establish the session requested to be established, and if the sessions exist, releasing one of the sessions with a lower priority and establishing the session requested to be established.

9. A Resource and Admission Control Subsystem (RACS) for controlling a number of user sessions, wherein the RACS comprises: a session count control module, a session information record module and a session count policy set storage module; wherein
the session count policy set storage module is adapted to store a session count policy set for user or user group;
the session information record module is adapted to record information of the sessions established; and
the session count control module is adapted to determine, by interacting with the session count policy set storage module, a session count policy suitable for the user who requests to establish a session, to perform a policy check based on the session count policy and the recorded information of the sessions established in the session information record module, and to establish a session for the user upon determining that the policy check for the user can be passed, otherwise, to reject session establishment requested by the user.

10. The RACS according to claim 9, wherein the session count policy for user comprises: specifying a maximum count of sessions permitted to be established for the user; or specifying a maximum count of a class of sessions permitted to be established for the user;
the session count policy for user group comprises: specifying a maximum count of sessions permitted to be established for all users belonging to a user group; or specifying a maximum count of a class of sessions permitted to be established for all users belonging to a user group; or specifying a maximum count of sessions permitted to be established for each user belonging to a user group, or specifying a maximum count of a class of sessions permitted to be established for each user belonging to a user group; and
the session count control module determines whether the number of sessions established for the user reaches the maximum count defined in the session count policy for user or user group; if not, determines that the policy check for the user can be passed; otherwise, determines that the policy check for the user may not be passed.

11. The RACS according to claim 9 or 10, wherein the RACS further comprises: a session priority control module adapted to determine whether a session priority is supported by the user when the session count control module determines that the policy check for the user may not be passed; if the policy check is supported, a session, in the sessions established for the user, with a priority lower than the priority of the current session requested to be established is released, and the session count control module is notified.
